# EUROPEAN PATENT APPLICATION

(11) **EP 4 574 338 A1**
(43) Date of publication of application: **25.06.2025**
(21) Application number: 23219302.9
(22) Date of filing: 21.12.2023
(51) Int. Cl.: B25B 27/00, B60L 50/60, B60L 50/64, B60S 5/06, H01M 10/613, H01M 50/204, H01M 50/249, H01M 50/258, H01M 50/264, H01M 50/289, B60K 1/04

(54) **A METHOD FOR DISASSEMBLING A FIRST AND A SECOND BATTERY MODULE**

(71) Applicant: VOLVO TRUCK CORPORATION, 405 08 Göteborg (SE)
(72) Inventor: LANDVIK, Sondre, 417 67 GÖTEBORG (SE); PETTERSSON, Jonas, 423 38 TORSLANDA (SE)
(74) Representative: Kransell & Wennborg KB

(57) **Abstract**

The present disclosure relates to a method for disassembling a first and a second battery module (2, 3) in an energy storage arrangement, the first and second battery modules each comprising at least one battery pack, wherein the battery pack of the first battery module comprises a first rod (90) extending through a through hole at a transverse side of the battery pack, the method comprising;
- providing a separation tool (10) to the laterally outer side of the first battery module, the separation tool comprising a threaded through hole wherein a threaded pusher device is guided;
- aligning the threaded pusher device (16) with a second end portion of the first rod and connecting the separation tool to the laterally outer side of the first battery modules;
- rotating the threaded pusher device such that the pushing force from the pushing-member moves the first rod inwardly, thereby causing the first battery module to move away from the second battery module.

## Description

### TECHNICAL FIELD

The disclosure relates generally to an energy storage arrangement. In particular aspects, the disclosure relates to a method for disassembling a first and a second battery module in an energy storage arrangement. The disclosure can be applied to heavy-duty vehicles, such as trucks, buses, and construction equipment, among other vehicle types. The disclosure may also be applicable for marine vessels as well as stationary arrangements. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and to position and assemble these energy storage systems to the frame of the heavy duty vehicle the battery modules may be arranged on opposing sides of the frame of the heavy duty vehicles and be connected to each other for stability and security reasons.

### SUMMARY

According to a first aspect of the disclosure, a method for disassembling a first and a second battery module in an energy storage arrangement is provided, the energy storage arrangement extending in a longitudinal direction, a transverse direction and a height direction, the first and second battery modules each comprising at least one battery pack, the first and second battery modules being suspended such that the first battery module faces the second battery module, and wherein the first battery module is in contact with the second battery module at a respective laterally inner side and wherein the battery pack of the first battery module comprises a first rod extending through a through hole at a transverse side of the battery pack, wherein a first end of the first rod provided in the first battery module is connected to the second battery module at the laterally inner side of the respective battery modules, the method comprising;
- providing a separation tool to the laterally outer side of the first battery module, the separation tool comprising a block provided with one or more through holes each comprising a bolt for connecting the separation tool to the first battery module, and a threaded through hole wherein a threaded pusher device is guided;
- aligning the threaded pusher device with a second end portion of the first rod and connecting the separation tool to the laterally outer side of the first battery modules by means of the bolt(s) provided in the one or more through holes; and
- rotating the threaded pusher device such that the pushing force from the pushing-member moves the first rod inwardly until the first rod is pushed against the battery pack of the second battery module, thereby causing, upon continued rotation of the threaded pusher device, the first battery module to move away from the second battery module.

The first aspect of the disclosure may seek to improve and facilitate disassembly of a first and a second battery module in an energy storage arrangement according to the present disclosure. If the energy storage system has been in an assembled state for several years before needing to disassemble the installation for service, there is a risk that the interfaces in the side-to-side can corrode together or otherwise become stuck. A greater force than pulling the battery modules by hand may thus be needed. A technical benefit may include that the first and the second battery module may be disassembled without causing damage to the battery modules and/or by using less force.

Optionally in some examples, the first and the second battery modules each comprises two or more battery packs arranged side-by side, and wherein the battery packs arranged side-by side in the first battery module are mechanically interconnected. A technical benefit may include to provide a more stable first battery module and which is easier to disassemble from the second battery module as one module.

Optionally in some examples, including in at least one preferred example, adjacent battery packs of the first battery module comprise a respective battery pack connecting member forming together the through hole at the transverse side of the adjacent battery packs for receiving the first rod. By sharing the interface between the battery packs more compact energy storage arrangement is providing, thus enabling more energy storage.

Optionally in some examples, including in at least one preferred example, the battery pack connecting member(s) are arranged between two adjacent battery packs of the first battery module and aligned with the laterally outer side of the first battery module and wherein one or both of the battery pack connecting member(s) comprise(s) one or more threaded holes adapted to receive the one or more bolts for connecting the separation tool to the first battery module. A technical benefit may include that the access of the separation tool to the first rod and the connection of the separation tool to the first battery module is improved.

Optionally in some examples, including in at least one preferred example, the battery pack of the second battery module comprises a second rod extending through a through hole at a transverse side of the battery pack, wherein a first end of the second rod provided in the second battery module is connected to the first end of the first rod provided in the first battery module at the first connecting side of the respective battery modules. A technical benefit may include that a facilitated connection between the first and second battery modules is provided. A further technical benefit may include that an improved disassemble between the first and the second modules is provided and a reduced risk of damaging the second battery module upon separation of the battery modules.

Optionally in some examples, including in at least one preferred example, adjacent battery packs of the second battery module comprise a respective battery pack connecting member forming together a through hole at the transverse side of the adjacent battery packs for receiving the second rod. By sharing the interface between the battery packs more compact energy storage arrangement is providing, thus enabling more energy storage.

Optionally in some examples, including in at least one preferred example, the first end of the first rod is connected to the first end of the second rod by means of a sleeve. A technical benefit may include that an improved connection between the first and second battery modules is obtained and that the pushing force from the pushing-member moves the first rod inwardly until the first rod is pushed against the second rod of the second battery module, thereby avoiding that the first rod pushes directly against the connection side of the second battery module.

Optionally in some examples, including in at least one preferred example, the sleeve is a threaded sleeve. A technical benefit may include that an improved connection between the first and the second rod is provided.

Optionally in some examples, including in at least one preferred example, the separation tool comprises two or more through holes, each comprising a bolt for connecting the separation tool to the first battery module. A technical benefit may include that an improved connection between the separation tool and the first battery module is provided.

Optionally in some examples, including in at least one preferred example, the method includes that the threaded pusher device is concentrically aligned with a second end portion of the first rod.

Optionally in some examples, including in at least one preferred example, the threaded pusher device has an outer head portion and an inner end portion, the inner head portion facing the second end portion of the first rod.

Optionally in some examples, including in at least one preferred example, a diameter of the inner end portion of the threaded pusher device is greater than the diameter of the second end portion of the first rod. A technical benefit may include that the step of aligning the threaded pusher device with a second end portion of the first rod is facilitated.

Optionally in some examples, including in at least one preferred example, the threaded pusher device has an intermediate threaded portion, extending between the inner end portion and the outer head portions.

Optionally in some examples, including in at least one preferred example, the method of disassemble a first and a second battery module in an energy storage arrangement is a method of disassemble a first and a second battery module in an energy storage arrangement which have been fused together by means of corrosion or the like.

Optionally in some examples, including in at least one preferred example, the first battery module comprises a set of first rods, each rod comprising the features of the first rod.

Optionally in some examples, including in at least one preferred example, the second battery module comprises a set of second rods, each rod comprising the features of the second rod.

According to a second aspect of the disclosure, a second aspect of the disclosure the method is a method for disassembling a first and a second battery module in an energy storage arrangement of a BEV vehicle and wherein the longitudinal direction, transverse direction and height direction of the energy storage arrangement correspond to a longitudinal direction, a transverse direction and a height direction of the BEV vehicle, and wherein the energy storage arrangement is suspended in the BEV vehicle on a respective side of a chassis of the BEV vehicle. The longitudinal direction of the BEV vehicle corresponds to a direction of travel of the vehicle.

The second aspect of the disclosure may seek to improve and facilitate disassembly of a first and a second battery module in an energy storage arrangement of a BEV vehicle according to the present disclosure. If the energy storage system has been assembled for several years before needing to disassemble the installation for service, there is a risk that the interfaces in the side-to-side can corrode together or otherwise become stuck. A greater force than pulling the battery modules by hand may thus be needed. A technical benefit may include that the first and the second battery module may be disassembled without causing damage to the battery modules and by using less force.

According to a third aspect of the disclosure, the method is a method for disassembling a first and a second battery module in an energy storage arrangement of a marine vessel and wherein the longitudinal direction, transverse direction and height direction of the energy storage arrangement correspond to a longitudinal direction, a transverse direction and a height direction of the marine vessel. The longitudinal direction of the marine vessel corresponds to a direction of travel of the marine vessel.

According to a fourth aspect of the disclosure, the method is a method for disassembling a first and a second battery module in an energy storage arrangement of a stationary energy storing system and wherein the longitudinal direction, transverse direction and height direction of the energy storage arrangement correspond to a longitudinal direction, a transverse direction and a height direction of the stationary energy storing system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example;
Fig. 2A is an exemplary exploded view of an energy storage arrangement connected to a frame of the vehicle according to an example;
Fig. 2B is an exemplary illustration of the energy storage arrangement connected to the frame of the vehicle according to an example;
Figs. 3A-3D is an exemplary illustration of the method for disassembling the first and the second battery module in an energy storage arrangement according to an example; and
Figs. 4A-4B are further exemplary illustrations of the method for disassembling the first and the second battery module in an energy storage arrangement according to an example.
Fig. 5 is a flowchart of the method as disclosed herein.

### DETAILED DESCRIPTION

The detailed description set forth below provides information and examples of the disclosed technology with sufficient detail to enable those skilled in the art to practice the disclosure.

The following disclosure aims at improving and facilitate disassembly of a first and a second battery module in an energy storage arrangement. If the energy storage system has been arranged in an assembled state for several years before needing to disassemble the installation for service, there is a risk that the interfaces in the side-to-side can corrode together or otherwise become stuck. A greater force than pulling the battery modules by hand may thus be needed. A technical benefit may include that the first and the second battery module may be disassembled without causing damage to the battery modules and/or by using less force.

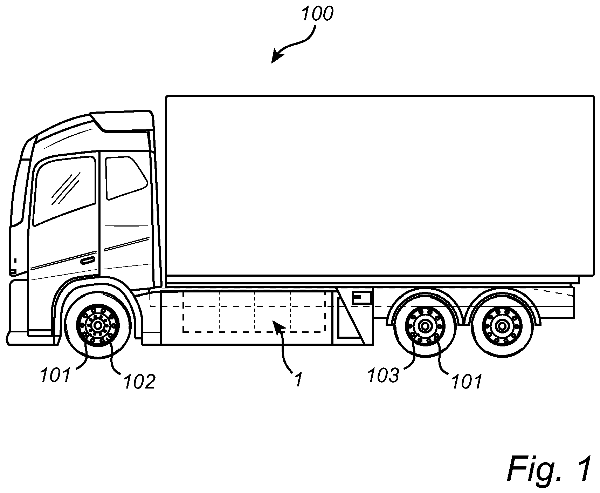

Turning to Fig. 1, which is an exemplary illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprises a single electric traction motor connected to the wheels via a conventional propulsion shaft (not shown). The at least one electric traction motor 101 is configured to apply a propulsive power to the wheels of the vehicle during propulsion, and to generate electric power during braking.

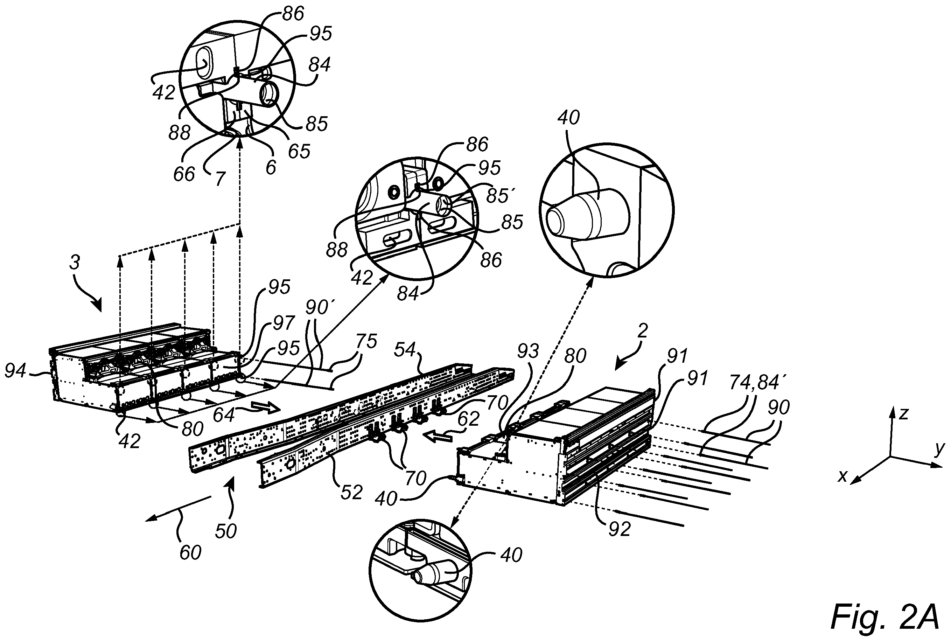

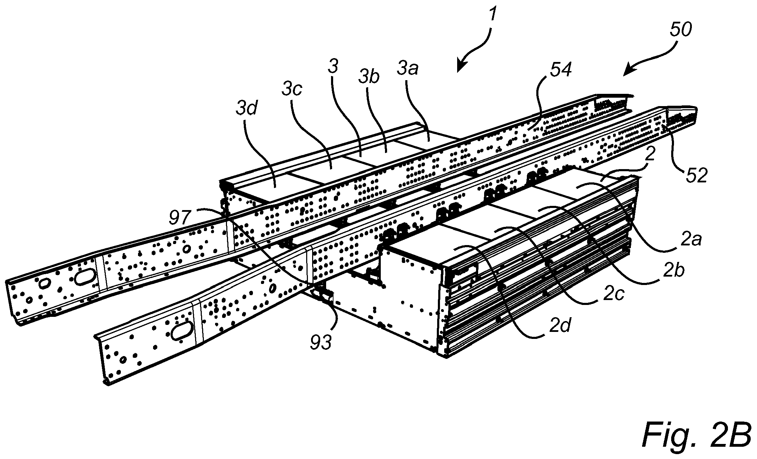

The vehicle further comprises an energy storage arrangement 1, also referred to as a high-voltage vehicle battery. The energy storage arrangement 1 is configured to feed electric power to the electric traction motor 101 during propulsion of the vehicle 100 and to receive electric power during braking. In order to describe the connection of the energy storage arrangement 100 to the frame of the vehicle 10, reference is now made to Figs. 2A and 2B.

Fig. 2A is an exemplary exploded view of the energy storage arrangement 1 connected to the frame 50 of the vehicle 10 according to an example. In particular, a first battery module 2 is arranged at a first lateral side of the frame 50, and a second energy storage arrangement 3 is arranged at a second lateral side of the frame 50. Thus, the first energy storage arrangement 101 is connected to the frame 50 on the first lateral side and the second battery module 3 is connected to the frame 50 on the second lateral side. The first and the second battery module 2,3 are furthermore connected to each other at a respective laterally inner side 93,97. The energy storage arrangement 1 extends in a longitudinal direction X, a transverse direction Y and a height direction Z.

When connecting the first 2 and second 3 battery module to the frame 50, the first battery module 2 is moved laterally in a first direction 62, being parallel to the transverse direction Y, towards the frame 50, and the second battery module 3 is moved laterally in a second direction 64, being parallel to the transverse direction Y, towards the frame 50. The exemplified frame 50 comprises a pair of longitudinal frame members 52, 54. Put it differently, the frame 50 comprises a first frame member 52 and a second frame member 54, wherein each of the first 52 and second 54 frame members extends in the longitudinal direction 60 of the vehicle 100. The first 2 and second 3 battery modules are connected to the frame 50 by arranging each of the plurality of support brackets 80 in abutment with a corresponding vehicle frame support 70 of the first 52 and second 54 frame members.

Before arranging each of the plurality of support brackets 80 in abutment with the corresponding vehicle frame support 70, a set of first rods 90 is guided laterally through a respective through hole 91 in the first battery module 2 from a laterally outer side 92 to the laterally inner side 93 of the first battery module 2. Each bar of the set of first bars 90 comprises a threaded portion 84' at a first end 74.

Furthermore, a plurality of second rods 90', of which only two are depicted in Fig. 2A, is guided laterally through a respective hole 95 in the second battery module 3 from a laterally inner side 97 to a laterally outer side 94 of the second battery module 3. Each of the second rods 90' is rotationally connected, at their respective first ends 75, to a threaded sleeve 84, i.e. threaded to internal threads 85 of the threaded sleeve 84. The threaded sleeves 84 are rotationally fixed in the hole 95 at the laterally inner side 97 between connecting members 65,66 forming together the through hole 95 at the transverse side 6,7 of the adjacent battery packs 3a,3b for receiving the second rod 90'. The exemplified threaded sleeves 84 comprises a pair of radially protruding portions 86 arranged in a corresponding recess 88 of the hole 95 to prevent the threaded sleeves 84 from rotating. Other means for preventing rotation are also conceivable, such as e.g. a threaded sleeve in the form of a hexagonal nut arranged in a corresponding hexagonal portion of the hole 95, etc. When the plurality of second rods 90' are arranged laterally through the second battery module 3, the second rods 90' can be fixated at the laterally outer side 94 of the second battery module 3 by e.g. a nut (not shown) tightening the rods.

The threaded portion 84' of the plurality of second rods 90' is, after the rods are guided laterally through the through holes 91 in the first battery module 2, threaded to a second set of the internal threads 85' of the threaded sleeve 84. Hereby, the plurality of first rods 90 is connected to the plurality of second rods 90' via the threaded sleeves 84. When the plurality of second rods 90' are connected to the sleeves 84, the rods 90' can be fixated at the laterally outer side 91 of the first battery module 2 by e.g. a nut (not shown) tightening the rods.

The energy storage arrangement 1 may also comprise a plurality of guiding pins 40. The exemplified guiding pins 40 in Fig. 2A are arranged at the laterally inner side 97 of the first battery module 2 and extends towards the second battery module 3. The second battery module 3 may comprise a corresponding plurality of guiding apertures 42 arranged at the laterally inner side 93 of the second battery module 3. When connecting the first 2 and second 3 battery modules to each other, the guiding pins 40 can assist the operator to correctly position the first battery module 2 relative to the second battery module 3 before guiding the plurality of first rods 90 laterally through the holes 91 of the first battery module 2. The fact that the first and the second battery modules 2,3 are further connected by means of rods 90,90', guiding pins 40 and guiding apertures 42 may render the disassembly more difficult.

Fig. 2B illustrates the assembled energy storage arrangement 1 wherein the first 2 and second 3 battery module are connected to the frame 50 and wherein the first and second battery modules 2,3 are connected at their respective inner laterally side 93,97.

The method as disclosed herein is a method for disassembling the first and the second battery module 2,3 in an energy storage arrangement 1, in particular if the energy storage system 1 has been assembled for several years before needing to disassemble the installation for service, there is a risk that the interfaces, i.e. the respective laterally inner sides of the battery modules, can corrode together or otherwise become stuck.

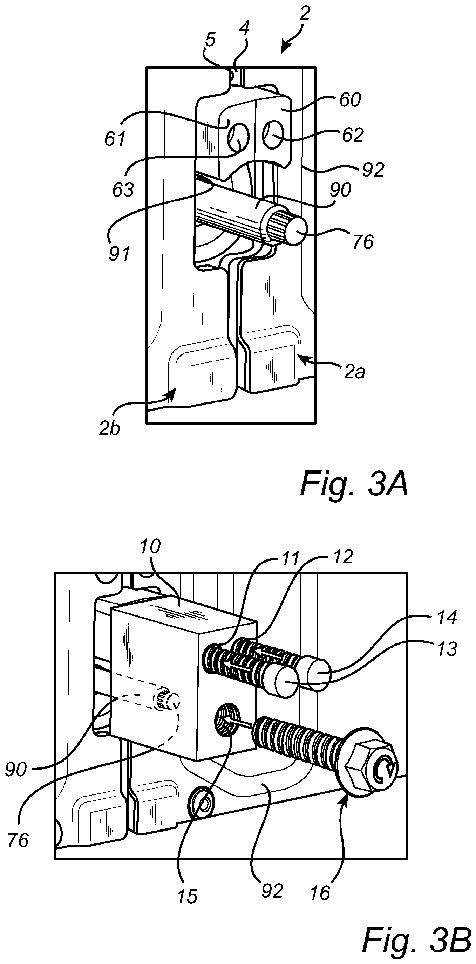

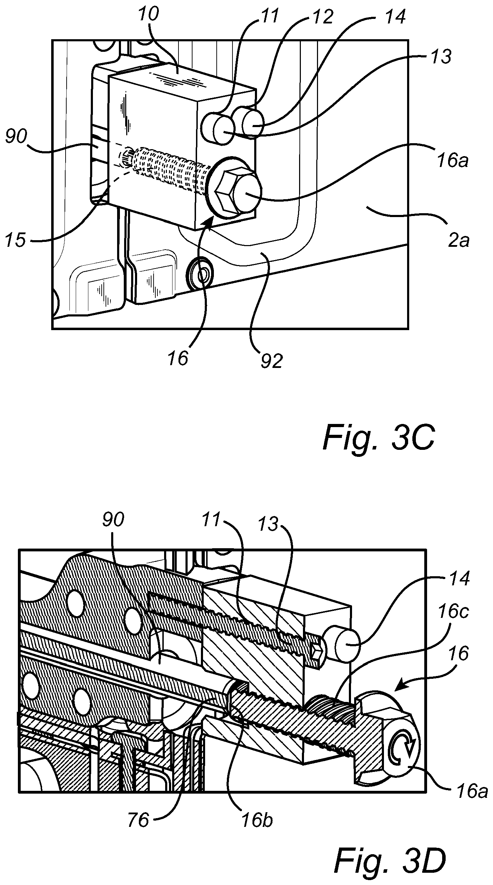

Fig. 3A illustrates the through hole 91 extending at a transverse side 4 of one the battery packs 2a in the first battery module 2. In this exemplary Fig. 3A, the through hole 91 extends between two adjacent battery packs 2a,2b. If there is a protection plate arranged on the laterally outer side 92 of the first battery module 2, it needs to be removed first to access a second end 76 of one of the first rods 90.

The adjacent battery packs 2a,2b of the first battery module 2 comprise a respective battery pack connecting member 60,61 forming together the through hole 91 at the transverse side 4,5 of the adjacent battery packs 2a,2b for receiving the first rod 90.

One or both of the battery pack connecting member(s) 60,61 comprise(s) one or more threaded holes 62,63.

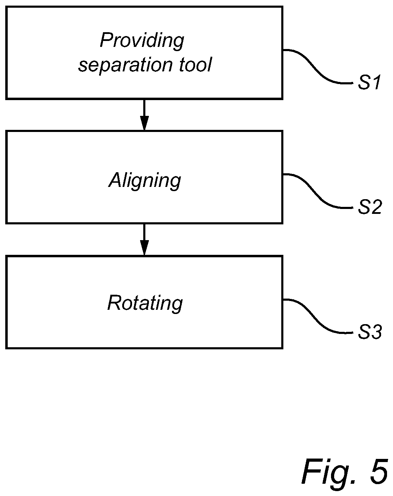

The method according to the present disclosure comprises, as illustrated in Fig. 3B and 3C and 5, providing S1 a separation tool 10 to the outer lateral side 92 of the first battery module 2, the separation tool 10 comprising a block provided with one or more through holes 11,12 each comprising a bolt 13,14 for connecting the separation tool 10 to the first battery module 2, and a threaded through hole 15 wherein a threaded pusher device 16 is guided. The method furthermore comprises aligning S2 the threaded pusher device 16 with the second end 76 of the first rod 90 and connecting the separation tool 10 with the outer lateral side 92 of the first battery module 2. The separation tool is connected by inserting the bolts 13,14 in the threaded holes 62,63 of the battery pack connecting members 60,61.

As may be seen in Figs. 3B and 3C, the threaded pusher device 16 has an outer head portion 16a and an inner end portion 16b, the inner head portion 16a facing the second end 76 of the first rod 90. To facilitate alignment between the threaded pusher device 16 and the rod 90, a diameter of the inner end portion 16b of the threaded pusher device 16 may be greater than a diameter of the second end 76 of the first rod 90. 14. The threaded pusher device 16 furthermore has an intermediate threaded portion 16c, extending between the inner end portion 16b and the outer head portion 16a.

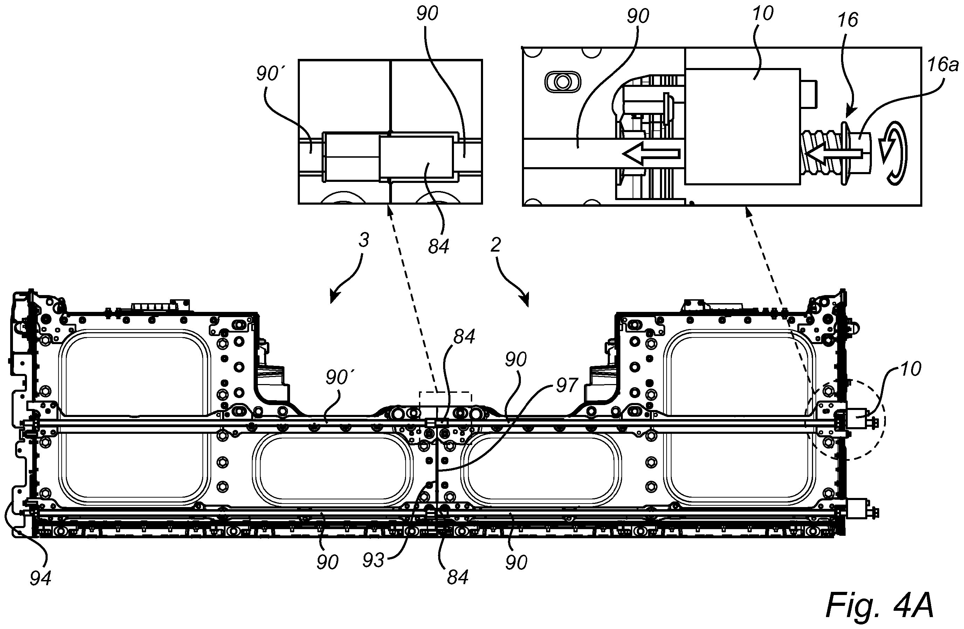

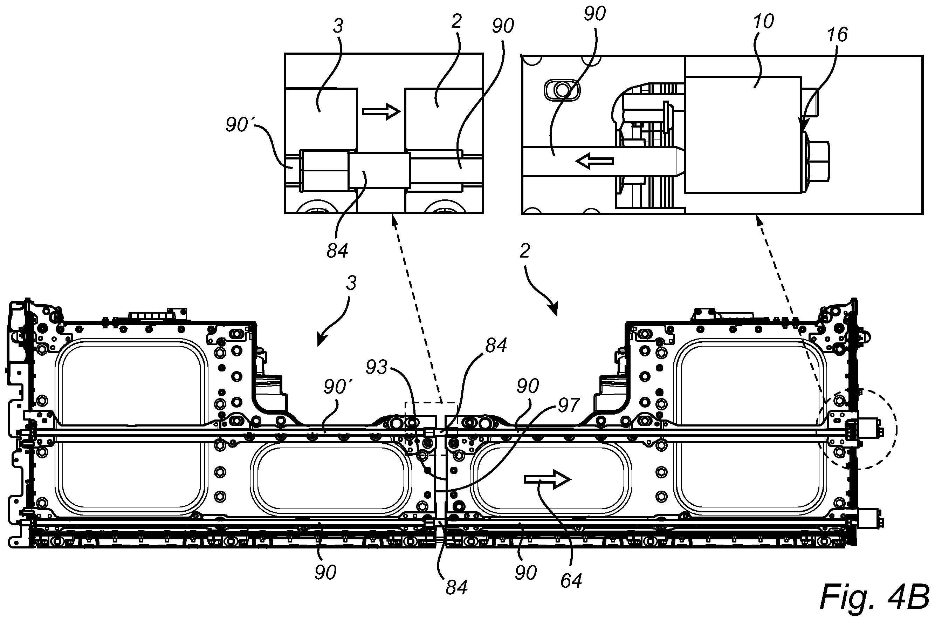

The method furthermore comprises rotating S3 the threaded pusher device 16 such that the pushing force from the pusher device 16 moves the first rod 90 inwardly until the first rod 90 is pushed against the second battery module 2, thereby causing, upon continued rotation of the threaded pusher device 16, the first battery module 2 to move away from the second battery module 2, as illustrated in Figs 4A and 4B.

In the example illustration provided in Figs 4A and 4B, the plurality of first rods 90 are connect to the plurality of second rods 90' by means of the threaded sleeve 84. Hence, when the pusher device 16 moves the first rod 90 inwardly it will push against the threaded sleeve 84 which will prevent lateral movements of the second rod 90' towards the outer laterally side 94 of the second battery pack 3. The second rod 90' may alternatively be prevented to move towards the outer laterally side 94 of the second battery pack 3 by means of a side protection plate 97 provided at the outer laterally side 94 of the second battery pack 3. Instead, as seen in Fig. 4B, the first battery module 2 will move laterally in the second direction 64 and thereby disengage guiding pins or the otherwise corroded or fused parts of the battery modules 2,3 and separate the first battery module 2 from the second battery module 3 such that it is thereafter easy to separate the two modules 2,3 from each other.

### EXAMPLE LIST

Example 1: A method for disassembling a first and a second battery module in an ESS installation, the energy storage arrangement extending in a longitudinal direction, a transverse direction and a height direction, the first and second battery modules each comprising at least one battery pack, the first and second battery modules being suspended such that the first battery module faces the second battery module, and wherein the first battery module is in contact with the second battery module at a respective laterally inner side and wherein the battery pack of the first battery module comprises a first rod extending through a through hole at a transverse side of the battery pack, wherein a first end of the first rod provided in the first battery module is connected to the second battery module at the laterally inner side of the respective battery modules, the method comprising;
- providing a separation tool to the laterally outer side of the first battery module, the separation tool comprising a block provided with one or more through holes each comprising a bolt for connecting the separation tool to the first battery module, and a threaded through hole wherein a threaded pusher device is guided;
- aligning the threaded pusher device with a second end portion of the first rod and connecting the separation tool to the laterally outer side of the first battery modules by means of the bolt(s) provided in the one or more through holes;
- rotating the threaded pusher device such that the pushing force from the pushing-member moves the first rod inwardly until the first rod is pushed against the battery pack of the second battery module, thereby causing, upon continued rotation of the threaded pusher device, the first battery module to move away from the second battery module.

Example 2: The method of example 1, wherein the first and the second battery modules each comprises two or more battery packs arranged side-by side, and wherein the battery packs arranged side-by side in the first battery module are mechanically interconnected.

Example 3: The method of example 2, wherein adjacent battery packs of the first battery module comprise a respective battery pack connecting member forming together the through hole at the transverse side of the adjacent battery packs for receiving the first rod.

Example 4: The method of example 3, wherein the battery pack connecting member(s) are arranged between two adjacent battery packs and aligned with the laterally outer side of the first battery module and wherein one or both of the battery pack(s) connecting member(s) comprise(s) one or more threaded holes adapted to receive the one or more bolts for connecting the separation tool to the first battery module.

Example 5: The method of any of the preceding examples, wherein the first and the second battery modules each comprises two or more battery packs arranged side-by side, and wherein the battery packs arranged side-by side in the second battery module are mechanically interconnected.

Example 6: The method of any one of the preceding examples, wherein the battery pack of the second battery module comprises a second rod extending through a through hole at a transverse side of the battery pack, wherein a first end of the second rod provided in the second battery module is connected to the first end of the first rod provided in the first battery module at the first connecting side of the respective battery modules.

Example 7: The method of example 6, wherein adj acent battery packs of the second battery module comprise a respective battery pack connecting member forming together the through hole at the transverse side of the adjacent battery packs for receiving the second rod.

Example 8 The method of examples 6 or 7, wherein the first end of the rod provided in the first battery module is connected to the first end of the second rod by means of a sleeve.

Example 9: The method of example 8, wherein the sleeve is a threaded sleeve.

Example 10: The method of any one of the preceding claims, wherein the separation tool comprises two or more through holes, each comprising a bolt for connecting the separation tool to the first battery module.

Example 11: The method of any one of the preceding examples, wherein the method includes that threaded pusher device is concentrically aligned with a second end portion of the first rod.

Example 12: The method of any one of the preceding examples, wherein the threaded pusher device has an outer head portion and an inner end portion, the inner head portion facing the second end portion of the first rod.

Example 13: The method of example 12, wherein a diameter of the inner end portion of the threaded pusher device is greater than the diameter of the second end portion of the first rod.

Example 14: The method of examples 12 or 13, wherein the threaded pusher device has an intermediate threaded portion, extending between the inner end portion and the outer head portions.

Example 15: The method of any one of the preceding examples, wherein the method for disassembling a first and a second battery module in an energy storage arrangement is a method for disassembling a first and a second battery module in an energy storage arrangement which have been fused together by means of corrosion or the like.

Example 16: The method of any one of the preceding examples, wherein the method is a method for disassembling a first and a second battery module in an energy storage arrangement of a BEV vehicle and wherein the longitudinal direction, transverse direction and height direction of the energy storage arrangement correspond to a longitudinal direction, a transverse direction and a height direction of the BEV vehicle, and wherein the energy storage arrangement is suspended in the BEV vehicle on a respective side of a chassis of the BEV vehicle.

Example 17: The method of any one of examples 1 to 15, wherein the method is a method for disassembling a first and a second battery module in an energy storage arrangement of a marine vessel and wherein the longitudinal direction, transverse direction and height direction of the energy storage arrangement correspond to a longitudinal direction, a transverse direction and a height direction of the marine vessel.

Example 18: The method of any one of examples 1 to 15, wherein the method is a method for disassembling a first and a second battery module in an energy storage arrangement of a stationary energy storing system and wherein the longitudinal direction, transverse direction and height direction of the energy storage arrangement correspond to a longitudinal direction, a transverse direction and a height direction of the stationary energy storing system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for disassembling a first and a second battery module (2,3) in an ESS installation (1), the energy storage arrangement (1) extending in a longitudinal direction (X), a transverse direction (Y) and a height direction (Z), the first and second battery modules (2,3) each comprising at least one battery pack (2a,2b,2c,2d,3a,3b,3c,3d), the first and second battery modules (2,3) being suspended such that the first battery module (2) faces the second battery module (3), and wherein the first battery module (2) is in contact with the second battery module (3) at a respective laterally inner side (93,97) and wherein the battery pack (2a,2b,2c,2d) of the first battery module (2) comprises a first rod (90) extending through a through hole (91) at a transverse side (4,5) of the battery pack (2a,2b,2c,2d), wherein a first end (74) of the first rod (90) provided in the first battery module (2) is connected to the second battery module (3) at the laterally inner side (93,97) of the respective battery modules (2,3), the method comprising;
- Providing (S 1) a separation tool (10) to the laterally outer side (92) of the first battery module (2), the separation tool (10) comprising a block provided with one or more through holes (11,12) each comprising a bolt (13,14) for connecting the separation tool (10) to the first battery module (2), and a threaded through hole (15) wherein a threaded pusher device (16) is guided through the threaded through hole (15);
- Aligning (S2) the threaded pusher device (16) with a second end portion (76) of the first rod (90) and connecting the separation tool (10) to the laterally outer side (92) of the first battery modules (2) by means of the bolt(s) (13,14) provided in the one or more through holes (11,12); and
- Rotating (S3) the threaded pusher device (16) such that the pushing force from the threaded pusher device (16) moves the first rod (90) inwardly until the first rod (90) is pushed against the battery pack (3a,3b,3c,3d) of the second battery module (3), thereby causing, upon continued rotation of the threaded pusher device (16), the first battery module (2) to move away from the second battery module (3).

2. The method of claim 1, wherein the first and the second battery modules (2,3) each comprises two or more battery packs (2a,2b,2c,2d,3a,3b,3c,3d) arranged side-by side, and wherein the battery packs (2a,2b,2c,2d,3a,3b,3c,3d) arranged side-by side in the first battery module (2) are mechanically interconnected.

3. The method of claim 2, wherein adjacent battery packs (2a,2b) of the first battery module (2) comprise a respective battery pack connecting member (60,61) forming together the through hole (91) at the transverse side (4,5) of the adjacent battery packs (2a,2b) for receiving the first rod (90).

4. The method of claim 3, wherein the battery pack connecting member(s) (60,61) are arranged between two adjacent battery packs (2a,2b) and at the laterally outer side 92 of the first battery module and wherein one or both of the battery pack connecting member(s) (60,61) comprise(s) one or more threaded holes (62,63) adapted to receive the one or more bolts (13,14) for connecting the separation tool (10) to the first battery module (2).

5. The method of any of the preceding claims, wherein the first and the second battery modules (2,3) each comprises two or more battery packs (2a,2b,2c,2d,3a,3b,3c,3d) arranged side-by side, and wherein the battery packs (3a,3b,3c,3d) arranged side-by side in the second battery module (3) are mechanically interconnected.

6. The method of any one of the preceding claims, wherein the battery packs (3a,3b,3c,3d) of the second battery module (3) comprises a second rod (90') extending through a through hole (95) at a transverse side of the battery pack (3a,3b,3c,3d), wherein a first end (75) of the second rod (90') provided in the second battery module (3) is connected to the first end (76) of the first rod (90) provided in the first battery module (2) at the first connecting side (93,97) of the respective battery modules (2,3).

7. The method of claim 6, wherein adjacent battery packs (3a,3b,3c,3d) of the second battery module (3) comprise a respective battery pack connecting member (65,66) forming together the through hole (95) at the transverse side (6,7) of the adjacent battery packs (3a,3b) for receiving the second rod (90').

8. The method of claims 6 or 7, wherein the first end (74) of the first rod (90) is connected to the first end (76) of the second rod (90') by means of a sleeve (84).

9. The method of claim 8, wherein the sleeve (84) is a threaded sleeve.

10. The method of any one of the preceding claims, wherein the separation tool (10) comprises two or more through holes (11,12), each comprising a bolt (13,14) for connecting the separation tool (10) to the first battery module (2).

11. The method of any one of the preceding claims, wherein the threaded pusher device (16) has an outer head portion (16a) and an inner end portion (16b), the inner head portion (16b) facing the second end portion (76) of the first rod (90).

12. The method of claim 11, wherein a diameter of the inner end portion (16b) of the threaded pusher device (16) is greater than a diameter of the second end portion (76) of the first rod (90).

13. The method of any one of the preceding claims, wherein the method is a method for disassembling a first and a second battery module (2,3) in an energy storage arrangement (1) of a BEV vehicle (100) and wherein the longitudinal direction (X), transverse direction (Y) and height direction (Z) of the energy storage arrangement (1) correspond to a longitudinal direction, a transverse direction and a height direction of the BEV vehicle, and wherein the energy storage arrangement (1) is suspended in the BEV vehicle (100) on a respective side of a chassis (50) of the BEV vehicle (100).

14. The method of any one of claims 1 to 13, wherein the method is a method for disassembling a first and a second battery module (2,3) in an energy storage arrangement (1) of a marine vessel and wherein the longitudinal direction, transverse direction and height direction of the energy storage arrangement correspond to a longitudinal direction, a transverse direction and a height direction of the marine vessel.

15. The method of any one of claims 1 to 13, wherein the method is a method for disassembling a first and a second battery module (2,3) in an energy storage arrangement (1) of a stationary energy storing system and wherein the longitudinal direction, transverse direction and height direction of the energy storage arrangement correspond to a longitudinal direction, a transverse direction and a height direction of the stationary energy storing system.
